**Europäisches Patentamt**

**European Patent Office**

**Office européen des brevets**

(11) Numéro de publication: **0 021 994**

**A1**

## DEMANDE DE BREVET EUROPEEN

(21) Numéro de dépôt: **80400898.5**

(22) Date de dépôt: **18.06.80**

(51) Int. Cl.³: **C 10 L 5/44**

(30) Priorité: **20.06.79 FR 7915755**

(43) Date de publication de la demande:
**07.01.81 Bulletin 81/1**

(84) Etats Contractants Désignés:
**AT BE CH DE GB IT LI LU NL SE**

(71) Demandeur: **CHEMINEES CARPINELLI**
**Km 10, Route de Prades**
**F-66170 Saint-Féliu-D'Avall(FR)**

(72) Inventeur: **Rougerie, Jean-Louis**
**Résidence Saint-Eloi 7, rue Rodin**
**F-91380 Chilly Mazarin(FR)**

(74) Mandataire: **Fruchard, Guy et al,**
**Cabinet Chereau & Cabinet Rodes Réunis 107, boulevard Pereire**
**F-75017 Paris(FR)**

(54) **Combustible naturel pour gril ou barbecue.**

(57) L'invention concerne un produit combustible naturel pour gril ou barbecue, conçu à partir d'essences végétales aromatiques ou non.

Ce produit est remarquable par le fait qu'il est constitué par un nombre déterminé de doses unitaires, formées de matériaux fragmentés et comprimés sous des formes géométriques simples offrant une épaisseur comprise entre 5 et 30 mm. Ces doses sont empilées les unes sur les autres et sont conditionnées dans une enveloppe hermétique de préférence combustible.

Croydon Printing Company Ltd.

# COMBUSTIBLE NATUREL POUR GRIL OU BARBECUE.

La présente invention concerne un produit combustible naturel pour gril ou barbecue, conçu à partir d'essences végétales aromatiques ou non.

Les combustibles solides les plus couramment employés sont :

- le charbon de bois, le sarment ou le cep de vigne qui sont découpés en morceaux et conditionnés en vrac dans des sacs ;

- les produits issus d'appareils du type " presses à briquettes" et constitués de déchets de sciure et de copeaux agglomérés en cylindres et conditionnés en vrac dans des sacs.

Ces combustibles présentent quelques inconvénients et notamment une faible densité et des problèmes connus de conditionnement, de stockage, de commercialisation et d'utilisation.

Il existe d'autres combustibles, tels ceux proposés dans les documents suivants :

- brevet américain n° 3.192.561 où il est décrit un appareil destiné à fabriquer des bûches ayant subi au préalable un dosage volumétrique imprécis, et enveloppées dans un emballage combustible mais non inflammable ;

- brevet américain n° 3.846.086 où il est décrit un " allumeur " destiné à enflammer le combustible principal et son procédé de fabrication ; ce produit contient d'une part, une substance aromatique non destinée à aromatiser les aliments en cours de cuisson, mais pour absorber les mauvaises odeurs émanant lors de sa combustion (présence d'un liquide inflammable), et comprend d'autre part, un emballage combustible n'ayant pas pour effet d'enflammer le produit principal ;

- brevet américain n°3.492.134 où il est décrit un procédé de fabrication de " tablettes " aromatiques combustibles destinées à parfumer les aliments en cours de cuisson ; ces tablettes sont mêlées ensuite au combustible principal.

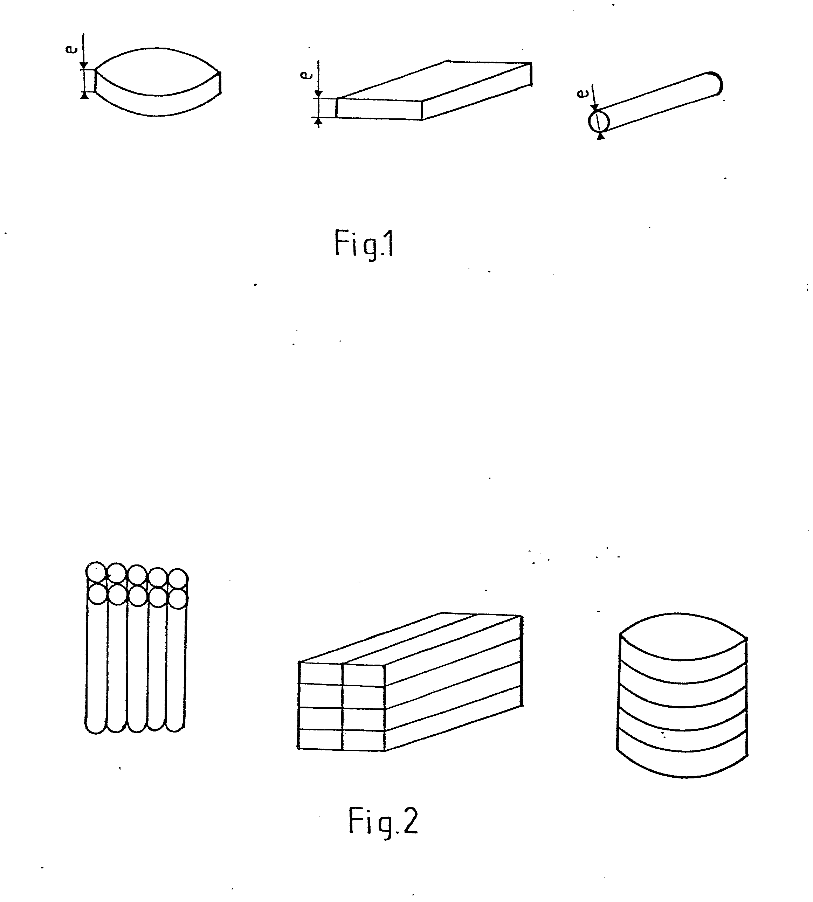

En vue d'améliorer grandement les techniques de conditionnement, de stockage, de commercialisation et d'utilisation de combustibles pour gril ou barbecue, le demandeur propose un combustible naturel remarquable par le fait qu'il est constitué par un nombre déterminé de doses unitaires empilées les unes sur les autres et conditionnées dans une enveloppe hermétique. Ces doses sont de préférence constituées de matériaux fragmentés et comprimés sous des formes géométriques simples, illustrées à titre non limitatif par les dessins de la figure 1 et offrant une épaisseur "e" comprise de préférence pour une meilleure inflammabilité entre 5 et 30 mm.

L'enveloppe dans laquelle sont arrangées les doses, est façonnée dans un matériau combustible destiné à provoquer l'inflammation du produit contenu. En outre, elle permet une présentation du produit emballé (dessins de la figure 2) offrant de nombreux avantages sur les plans commercial, d'utilisation et de contrôle des quantités employées par le consommateur. En effet, selon une caractéristique particulièrement avantageuse de l'invention, les doses sont pesées individuellement ou collectivement avant la phase de compression, ce qui permet de donner au consommateur l'assurance de payer le même prix, rapporté à l'unité de poids, quelle que soit la quantité achetée.

Il sera possible également, selon une autre variante de l'invention, d'adjoindre un extrait naturel aromatique avant la phase de compression, en le mélangeant intimement avec les fragments, soit sous forme pulvérisée s'il est liquide, soit sous forme finement divisée s'il est solide.

Dans le cas de l'utilisation d'une matière première végétale aromatique, l'adjonction d'un extrait aromatique dans la fabrication des doses devient inutile.

En pratique, les fragments de base peuvent avoir n'importe quelle dimension :

- en-dessous d'une certaine dimension, ils seront agglomérés par l'utilisation de techniques connues du type de celles employées par les presses à briquettes, où la braise se présente sous la forme de doses compactes incandescentes ;

- au-dessus d'une certaine dimension, ils ne seront pas agglomérés mais les fragments se sépareront sous l'effet de la chaleur après avoir été mis en combustion.

Dans le premier cas, l'état de braise est donné par la dose qui possède une structure anatomique bien spécifique (aggloméra-

tion) alors que dans le deuxième, c'est la structure anatomique de l'essence végétale de base qui définit l'état de braise.

Sur le plan de la réalisation industrielle, tous les dispositifs élaborant des doses par compression ainsi que ceux les conditionnant (domaine de la biscuiterie) pourront être adaptés au produit de l'invention.

Bien entendu, l'invention venant d'être exposée ci-dessus, permet d'envisager d'autres formes d'exécution telles qu'elles apparaîtront aux hommes de métier spécialisés dans la présente technique, et ce en restant dans le cadre défini par les termes des revendications qui suivent.

# REVENDICATIONS

1. Combustible naturel pour gril ou barbecue, CARACTERISE PAR LE FAIT QU'il est constitué par un nombre déterminé de doses unitaires empilées les unes sur les autres et conditionnées dans une enveloppe.

2. Combustible selon la revendication 1, CARACTERISE PAR LE FAIT QUE les susdites doses sont constituées de matériaux fragmentés et comprimés sous des formes géométriques simples offrant une épaisseur comprise entre 5 et 30 mm.

3. Combustible selon la revendication 1, CARACTERISE PAR LE FAIT QUE les doses sont pesées avant la phase de compression.

4. Combustible selon la revendication 1, CARACTERISE PAR LE FAIT QUE la susdite enveloppe d'emballage est hermétique.

5. Combustible selon la revendication 1, CARACTERISE PAR LE FAIT QUE la susdite enveloppe d'emballage est combustible et qu'elle provoque l'inflammation desdites doses.

6. Combustible selon l'une quelconque des revendications 1, 2, 3, 4 et 5, CARACTERISE PAR LE FAIT QUE la matière de base est choisie parmi les essences végétales aromatiques.

7. Combustible selon l'une quelconque des revendications 1, 2, 3, 4 et 5, CARACTERISE PAR LE FAIT QU'un extrait aromatique est incorporé dans lesdites doses avant la phase de compression.

Fig.1

Fig.2

**Office européen des brevets**

**RAPPORT DE RECHERCHE EUROPEENNE**

Numéro de la demande

EP 80 40 0898

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>FR - A - 2 021 292</u> (VALAGEAS BERGER)<br><br>* Revendications 1-4; figures *<br><br>-- | 1-6 |
| X | <u>US - A - 4 060 396</u> (BURTON)<br>* Revendications 1-6; figure 1 *<br><br>-- | 1-6 |
| X | <u>DE - A - 2 243 334</u> (BOEHRINGER SOHN)<br><br>* Revendication; page 1, lignes 13-23 *<br><br>-- | 1-6 |
| EP | <u>EP - A - 0 013 938</u> (KUHLMANN)<br>* Revendications 1,2; figure 1 *<br><br>-- | 1-5 |
| | <u>FR - A - 2 378 848</u> (RENE BAILLAR-GUET)<br><br>* Revendication *<br><br>---- | 7 |

**CLASSEMENT DE LA DEMANDE (Int. Cl. 3)**

C 10 L 5/44

**DOMAINES TECHNIQUES RECHERCHES (Int. Cl. 3)**

C 10 L 5/44
5/40
11/04

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche<br>La Haye | Date d'achèvement de la recherche<br>22-09-1980 | Examinateur<br>MEERTENS |
|---|---|---|

OEB Form 1503.1 06.78